# EUROPEAN PATENT SPECIFICATION

(11) **EP 3 172 806 B1**
(45) Date of publication and mention of the grant of the patent: **23.05.2018**
(21) Application number: 14783899.9
(22) Date of filing: 08.08.2014
(51) Int. Cl.: H02B 1/50, H02B 7/08

(54) **TILTABLE UNDERGROUND PROTECTIVE CABINET FOR ELECTRICAL EQUIPMENT WITH COUNTERWEIGHT TILTING MECHANISME**
KIPPBARER UNTERIRDISCHER SCHUTZSCHRANK FÜR ELEKTRISCHE ANLAGE MIT GEGENGEWICHTKIPPMECHANISMUS
ARMOIRE DE PROTECTION SOUTERRAINE INCLINABLE POUR ÉQUIPEMENT ÉLECTRIQUE AVEC MÉCANISME D'INCLINAISON DE CONTREPOIDS

(30) Priority: 25.07.2014 HU 1400163
(43) Date of publication of application: 31.05.2017
(73) Proprietor: Jet-Vill Korlátolt Felelösségü Társaság, 1158 Budapest (HU)
(72) Inventor: MAROSÁN, István, H-1164 Budapest (HU)
(74) Representative: Ronaszéki, Tibor
(86) International application number: PCT/HU2014/000070
(87) International publication number: WO 2016/012820

(56) References cited:
- DE-U1-202007 004 293
- ES-A1- 2 192 493
- FR-A1- 2 680 609

## Description

The subject of the invention relates to a facility for the protection of electrical equipment, which contains a house enclosing a receiving space as well as a tiltable cabinet structure located in the receiving space of the house and suitable for accommodating the electrical equipment, a movement-aiding part-unit facilitating the turning of the tiltable cabinet structure is inserted between the tiltable cabinet structure and the house, where the movement-aiding part-unit has a rotation axle and an axle support cooperating with the rotation axle with a main axis line and an axle support cooperating with the rotation axle, one of the axle support and the rotation axle of the movement-aiding part-unit is connected to the house and the other from the axle support and the rotation axle of the same movement-aiding part-unit is connected to the cabinet structure.

With the growth of the electric energy supply network and the information technology and telecommunications networks an increasing amount of electrical equipment has to be located in public areas, e.g. electrical distributors and telecommunication stations, that need to be protected against environmental effects and unauthorized interventions. The essence of such facilities is that the equipment to be protected has a house encompassing it and protecting it, in the internal space of which the devices may be arranged securely. One such solution, among others, is presented in patent specification registration number EP 1.684.394.

An increasingly important expectation of such facilities is that they be located under the ground surface. Examples of such sub-surface transformer stations are presented in utility model specifications registration numbers CN 203039263 U and CN 202772478 u.

However, the disadvantage of these solutions is that only a part of the protective facility is located under the ground surface, an entrance part suitable for accessing the protected space or some sort of access point is established protruding from the ground surface, which, in many cases, e.g. in town center areas, is not desirable.

It is also disadvantageous that the maintenance and repair of the protected equipment is difficult due to the small internal space, and occasionally may even be dangerous, avoiding which is also a requirement.

An increasingly importance demand is for the maintenance, inspection and repair of electrical equipment located in a subsurface space to be simply and quickly performed. It was for this purpose that the arrangement contained in utility model specification registration number DE 202007004293 was elaborated, in the case of which an internal fitting cabinet is located in a service manhole located under the ground surface which may be turned out of the service manhole around rotation points located at the corners of the one side edge. In this way the electrical equipment located under ground level may be turned out above the ground surface while being maintained, and so there the necessary task may be performed more simply. As, however, the turning out of the fitting cabinet is difficult, a pair of gas springs was fitted between the manhole and the fitting cabinet as a movement-aiding part-unit to counterbalance the weight of the fitting cabinet.

As a consequence of this, however, a deficiency of the given solution is that the structural unit used for counterbalancing the large weight is sensitive to environmental impacts, such as contamination, changes in temperature and humidity, therefore it may easily become faulty, which may make it difficult to turn out the cabinet structure, and may even make it impossible in a given case. Also the repair or replacement of the faulty component causes further difficulties.

Solution versions are also known of in the case of which the cabinet structure located in the manhole may be turned out from the internal space of the subsurface manhole with human force using a drawbar. However, the disadvantage of such structures is that the use of human force significantly limits the dimensions and the weight of the electrical equipment that may be located in the cabinet structure.

Publication document number FR 2.680.609 presents a manhole located under the ground which has a cover structured in such a way that the electrical equipment to be located in the manhole can be fixed to it. Furthermore, the cover of the manhole has a sheet at 90° to the manhole cover, and is fixed to the manhole cover in this position so that when the manhole cover is opened this sheet completely covers the manhole opening. From the point of view of accident prevention, the solution is advantageous, but it has a significant disadvantage in that the sheet fitted to the manhole cover increased the amount of force required to open the manhole cover, and so makes opening and closing the manhole even more difficult.

Publication document number ES 2.192.493 also presents an underground manhole, in the case of which a movement-aiding part-unit has been built in between the sidewall of the manhole and the house servicing to hold the electrical equipment. The given movement-aiding part-unit has an energy-storage device in which a pneumatic cylinder or cylinders assist the raising and replacing of the manhole cover and the electrical equipment fixed to it.

The disadvantage of the solution, however, is that in the case of electrical equipment of differing weight, a different energy-storage device, i.e. pneumatic cylinder or cylinders must be used, which makes it difficult for the solution to be put into general use.

A further disadvantage of this construction is that the movement-aiding part-unit itself is made from numerous components; therefore its installation is complex and its safe use demands appropriate specialist knowledge.

Another disadvantage is that in the case the energy-storage device becomes faulty, the chance of an accident increases, and in a given case moving the cover of the manhole is difficult or impossible due to the unbalanced large weights.

The patent specification EP 994.543 and the published patent application US2006/0289190 contain solutions in which a counterweight is connected to the retractable cabinet. In the first solution the counterweight is connected to the retractable cabinet by a cable and the counterweight is very fare from the cabinet. In the second solution the task of the counterweight is to keep the lid of the container in an open position.

Our aim with the structure according to the invention was to overcome the deficiencies of the known subsurface manholes with a cabinet structure that may be turned out and to create a version the movement-aiding part-unit of which that pulls up the cabinet structure makes it possible to easily and simply pull out even a large cabinet structure accommodating heavy electrical equipment from a subsurface manhole and relocate it without using auxiliary energy, with a small amount of human force and the movement-aiding part-unit should have reliable operation and have a simple structural arrangement.

The basic idea of the solution according to the invention was that the structure of the internal space of subsurface manholes is in all cases arranged so that the manhole is capable of accommodating a part of the cabinet structure located in the internal space of the manhole in its turned out position, therefore it is possible to only have to turn out a part of the cabinet structure from the manhole around a horizontal axle, the other part may remain in the internal space of the manhole after turning it out. As a result of this if the axis of rotation of the cabinet structure is not selected to be along one of its edges, it becomes possible for the part-weights of the cabinet structure on the two sides of the axis to exert approximately the same amount of torque onto the well selected rotation axle - on the basis of the principle of a seesaw - but in the opposite directions, therefore by placing a well selected counterweight onto the appropriate part of the cabinet structure the torques may be balanced out and so the tilting of the cabinet structure may be realized with a slight amount of force being exerted even in the case of heavy electrical equipment.

In this way therefore the recognition that led to the construction according to the invention was that if the generally used cabinet structure is connected to the house in a different way.to those known of, and also with consideration to the new way of connecting to the cabinet structure, if a unique counterweight is connected to it, then the cabinet structure may be turned out of the internal space of the house in a different way to what is usual, around a different axis of rotation, with a completely different counterbalancing so that a minimal amount of torque is necessary to pull out and tilt back the cabinet structure and so the task may be solved.

In accordance with the set aim the facility according to the invention for protecting electrical equipment - which contains a house enclosing a receiving space as well as a tiltable cabinet structure located in the receiving space of the house and suitable for accommodating the electrical equipment, a movement-aiding part-unit facilitating the turning of the tiltable cabinet structure is inserted between the tiltable cabinet structure and the house, where the movement-aiding part-unit has a rotation axle and an axle support cooperating with the rotation axle with a main axis line and an axle support cooperating with the rotation axle, one of the axle support and the rotation axle of the movement-aiding part-unit is connected to the house and the other from the axle support and the rotation axle of the same movement-aiding part-unit is connected to the cabinet structure - is arranged in such a way so that in the connected position of movement-aiding part-unit the main axis line of the rotation axle of movement-aiding part-unit is different from any edge of the side plates of the cabinet structure, which pass through on any corner of the cabinet structure, the movement-aiding part-unit is coupled with a counterweight, where the counterweight is connected to the cabinet structure in such a way that the torque exerted onto the rotation axle as a result of the weight of the cabinet structure, and the torque exerted onto the rotation axle as a result of the weight of the counterweight of the movement-aiding part-unit essentially balance each other.

A further feature of the facility according to the invention may be that the movement-aiding part-unit has two axle supports and at least one rotation axle cooperating with them, the axle supports of the movement-aiding part-unit are fastened to the two opposite side walls of the house, while the rotation axle of the movement-aiding part-unit cooperating with the axle supports is connected to the cabinet structure at places different to the corners of the cabinet structure's side plates, and in this way the cabinet structure is connected to the house so that it may rotate as compared to the house.

In the case of a possible version of the facility the counterweight is connected to the cabinet structure arranged near to the delimiting surface of the cabinet structure, preferably along the external surface of the one side plate.

In the case of yet another embodiment of the invention the movement-aiding part-unit has two rotation axles, and the individual rotation axles are arranged coaxially between the two facing side plates of the cabinet structure and the facing side walls of the house.

In the case of another still different embodiment of the facility the axle support of the movement-aiding part-unit is assembled from a lower support half and an upper cover half, and when the axle support is in its operating position the support half and the cover half are fastened together using one or more fasteners.

In the case of a further embodiment of the invention the house contains a manhole body that has a base member and side walls as well as a cover covering the manhole body, and the manhole body is at least partly sunk under the surface into the ground.

In the case of yet another different embodiment of the facility the cover covering the house's manhole body is assembled from at least two parts, where the one part is created as a stationary cover, while the other part is created as a moving cover, and when the cover is in its open position, the stationary cover is located on the manhole body partially covering the manhole body.

From the point of view of the invention it may be favorable if a movement-limiting device preventing the tilting of the cabinet structure is inserted between the house and the cabinet body: Also, in a given case, a water-protected connection box is located in the receiving space of the house, and the water-protected connection box is connected to the electrical equipment located in the cabinet structure with insulated electric cables.

The most important advantage of the facility according to the invention is that due to the uniquely structured and arranged movement-aiding part-unit in the case of the usually used cabinet structures a greater weight, i.e. a greater amount of electrical equipment may be located in the cabinet structure, or houses containing electrical equipment with an even greater weight and dimensions may be used, and even in this case the tiltable cabinet structure may be turned into its servicing position easily, with a small amount of human force without using supplementary devices requiring separate auxiliary energy.

The advantage deriving from this is that due to the new type of movement-aiding part-unit the probability of a fault occurring is small. The operation - human force notwithstanding - has no energy requirement, therefore, the facility according to the invention may be used and installed at any desired location.

Another advantage deriving from the structural arrangement of the facility is that the risk of accident for the operator or even for passers-by is reduced, and separate precautions do not have to be taken in order to avoid accidents as a result of the arrangement of the structure.

Another advantage that must be mentioned is that the facility according to the invention has a simple structures, it may be manufactured using traditional technology, it may be installed easily and with a small amount of human work, and following installation of the movement-aiding part-unit it does not require any special maintenance. In this way the entire lifetime of the facility conforms to the lifetime of the electrical equipment located in the cabinet structure.

Another advantage is that due to the structure of the movement-aiding part-unit it is possible to prevent the cabinet structure floating up, which is an important requirement from the point of view of reliable operation.

Another feature to be viewed as an advantage is that a single, simple tool is sufficient to move and operate the facility's cover, the movement-aiding part-unit and the movement-limiting device, which makes the professional handling and operation of the facility even easier. As a consequence a highly qualified specialist is not required in order to open the facility, which has a favorable influence on the maintenance costs as well.

The balanced cabinet structure and so the operation requiring a small amount of force to perform the tilting makes it possible to use the facility according to the invention to accommodate electrical equipment of greater size and weight, which cannot be solved in the case of traditional constructions. So with this, the sphere of use of the facility according to the invention may be significantly extended.

The economic advantage originating from the previous technical advantages is that the cost of installing the facility and its maintenance costs are more favorable as compared to those of traditional solutions, therefore it may be used in a wider sphere.

In the following the facility according to the invention is presented in more detail in connection with exemplary embodiments on the basis of the figures. In the figures
- Figure 1: shows the side view picture of a possible version of the facility according to the invention in a partially sliced view
- Figure 2: shows the view of figure 1 taken from the direction II, in a partially sliced view
- Figure 3: is a side view of a version of the movement-aiding part-unit, in a partially sliced view.

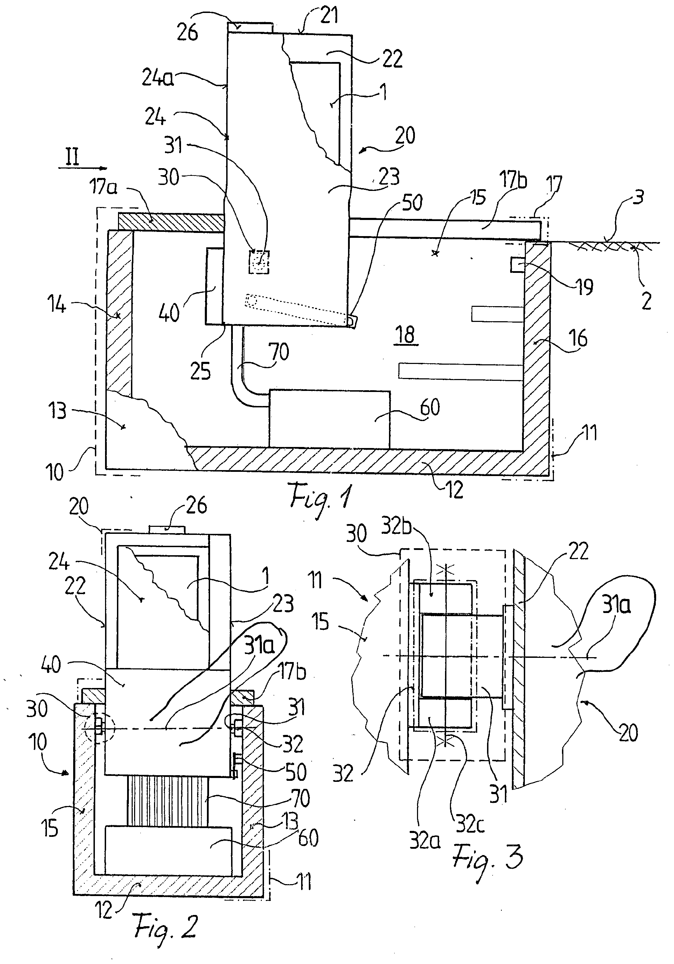

Figure 1 and figure 2 shows a version of the facility according to the invention the reinforced concrete house 10 of which is recessed under the surface 3 of the ground 2, and so the electrical equipment 1 fastened inside the cabinet structure 20 arranged in the receiving space 18 of the house 10 - when in its operating position - is located under the surface 3 of the ground 2.

In this case the house 10 includes a manhole body 11 consisting of a base member 12, side wall 13, side wall 14, side wall 15 and side wall 16, and a cover 17, where the cover 17 is assembled from a stationary cover 17a and a moving cover 17b. The task of the stationary cover 17a is while remaining in its position to cover the unmonitored part of the receiving space 18 behind the cabinet structure 20 even when the cabinet structure 20 - shown in figure 1 - is in its position turned out of the receiving space 18 surrounded by the manhole body 11 of the house 10, while the moving cover 17b may be removed from the manhole body 11 of the house 10, and in this way the receiving space 18 surrounded by the manhole body 11 may simply be made freely accessible and approachable from the given direction. Naturally the moving cover 17b may consist of several pieces, which may make it easier to handle it.

Figure 1 also illustrates well that the water-protected connection box 60 is located in the receiving space 18 of the manhole body 11 fastened to the base member 12, which, on the one part, receives the cables - not shown in the figures - located in the ground 2 and, on the other part, receives the electric cables 70 with which the electrical equipment 1 of the cabinet structure 20 may be connected to the cables. The purpose of the water-protected connection box 60 is even in the case of water penetration to protect and insulate the electrical connections located near to the base member 12 of the manhole body 11 of the house 10 from water penetrating into the receiving space 18 of the house 10, and so preventing short circuits and any damage resulting from this, e.g. faults occurring to the electrical equipment 1 located in the cabinet structure 20.

Also illustrated in figure 1 is that the first locking-structure-half 19 is fastened to the side wall 16 of the manhole body 11 of the house 10, which, in cooperation with the second locking-structure-half 26 fastened to the cabinet structure 20, retains the cabinet structure 20 in its basic position, i.e. closed position. The part of the cabinet structure 20 protruding above the cover 17 is turned into the receiving space 18 of the house 10 when the cabinet structure 20 is in its basic position, and the second locking-structure-half 26 locks with the first locking-structure-half 19. At this time the moving cover 17b is positioned next to the stationary cover 17a and the unison of the stationary cover 17a and the moving cover 17b completely covers the receiving space 18 of the manhole body 11, therefore the cover 17 of the facility is essentially at the same level as the surface 3 of the ground 2, e.g. at pavement level.

Figure 1 also shows how the cabinet structure 20 and the counterweight 40 are connected to each other. In the case of this embodiment of the facility according to the invention the counterweight 40 is fastened to the cabinet structure 20 outside of the delimiting surface of the cabinet structure 20, in this case along the external surface 24a of the side plate 24 in such a way that the counterweight 40 extends downwards on the external surface 24a of the side plate 24 to the lower corner 25 of the cabinet structure 20, and - as can be seen well in figure 2 - it essentially covers the lower third of the side plate 24 of the cabinet structure 20.

Figure 2 better illustrates that the connection between the cabinet structure 20 and the house 10 is realized by the movement-aiding part-unit 30. In this case there are two independent movement-aiding part-units 30, and both the individual movement-aiding part-units 30 include one rotation axle 31 and also one axle support 32. Of these the one rotation axle 31 and the one axle support 32 are inserted between the side wall 15 of the manhole body 11 and the side plate 22 of the cabinet structure 20, while the other rotation axle 31 and axle support 32 are between the side wall 13 of the manhole body 11 and the side wall 23. In this way then the rotation axles 31 of the movement-aiding part-units 30 are fastened to the two facing side plates 22 and 23 of the cabinet structure 20 while its axle supports 32 are fastened to the two facing side walls 13 and 15 of the manhole body 11. The rotation axle 31 of the movement-aiding part-unit 30 located between the side plate 22 of the cabinet structure 20 and the side wall 15 of the manhole body 11 has a main axis line 31a and the rotation axle 31 located between the side plate 23 of the cabinet structure 20 and the side wall 13 of the manhole body 11 has a main axis line 31a. The main axis line 31a of the rotation axles 31 located on the two opposite side plates 22 and 23 are coaxial and together they form the virtual axis of the cabinet structure 20.

Figure 3 shows the structure of the movement-aiding part-unit 30 in more detail. Here it can be easily observed that the axle support 32 consists of a support half 32a, a cover half 32b and fasteners 32c fixing these to each other. The rotation axle 31 protruding from the plane of the side plate 22 of the cabinet structure 20 is retained between the support half 32a and the cover half 32b of the axle support 32, while the support half 32a and the cover half 32b are fixed together with fasteners 32c.

As a consequence of this arrangement of the axle support 32 the floating up of the cabinet structure 20, i.e. it rising up out of the receiving space 18 of the house 10, may be prevented in the case of water penetration. As in the case of this arrangement of the rotation axle 31, it is not merely resting on the support half 32a of the axle support 32, instead with the help of the cover half 32b it is connected to the axle support 32 so that it may rotate but not rise up. Also the support half 32a of the axle support 32 may be firmly fastened in the usual way to the side wall 15 of the manhole body 11 in such a way that it may bear loads.

Returning to figure 2, it may also be seen from this that the rotation axles 31 of the individual movement-aiding part-units 30 are coaxial with each other in the interest of the cabinet structure 20 be easily able to tilt around the two coaxial rotation axles 31.

Also in figure 1 it may be observed that the rotation axle 31 is not connected to the side plate 23 of the cabinet structure 20 at the corner 25 of the cabinet structure 20 but - with respect to the position presented in figure 1 - further up.

Here it must also be noted that the rotation axle 31 may be located on the two facing side plates 22 and 23 of the cabinet structure 20, but it is also possible that in the case of using a single, longer rotation axle 31 that runs between the side wall 13 and side wall 15 of the manhole body, it should be fastened to the side plate 24 or, in a given case, to the counterweight 40 fastened to the external surface 24a of the side plate 24. What is more, it is also possible that, for example, that the movement-aiding part-unit 30 has a single rotation axle 31 that is fastened to the manhole body 11, and the one or more axle supports 32 of the movement-aiding part-unit 30 is/are fastened to the external surface 24a of the side plate 24 of the cabinet structure 20 or even to the counterweight 40.

It may be seen then that the movement-aiding part-unit 30 may be made and inserted between the cabinet structure 20 and the house 10 in numerous ways, however, in all cases it is an important requirement that the virtual axis of the tilting of the cabinet structure 20 should not pass through any of the corners 25 of the cabinet structure 20, and the counterweight 40 should appropriately counterbalance the weight of the cabinet structure 20 in the interest of a part of the cabinet structure 20 remaining in the receiving space 18 of the house 10 when it is tilted with a small amount of force around its virtual axis, while the other part rises above the surface 3 of the ground 2.

It is obvious from the introduction of the drawings that this virtual axis is the main axis line 31a of the rotation axles 31 of the individual movement-aiding part-units 30, which rotation axles 31 are coaxial with each other. Also, in the case that there is just a single rotation axle 31, then this rotation axle 31 - which is a real physical axle and has a measurable length, therefore it has more than two points - determines a single theoretical main axis line 31a, which actually is the longitudinal axis of this single rotation axle 31, which itself is the axis of rotation.

The movement-limiting device 50 is responsible for securely retaining the cabinet structure 20 when it is in its turned-out position, a possible version of which may be seen in outline in figures 1 and 2. Here the movement-limiting device 50 is a lever operating by the force of gravity that stops up against the cabinet structure 20 by itself when the cabinet structure 20 is turned out and it does not permit it to rotate back until the lever is lifted.

The use of the facility according to the invention takes place in the following way. First the balancing of the cabinet structure 20 must be solved by fastening a counterweight 40 of the appropriate weight to the side plate 24 of the cabinet structure 20. When selecting the size of the weight, besides taking into consideration the weight of the cabinet structure 20 and of the electrical equipment 1 placed in it, what must also be taken into consideration is where rotation axis of the cabinet structure 20, i.e. the rotation axle 31 or axle support 32 of the movement-aiding part-unit 30, will be located. Following the installation of the counterweight 40 and of the rotation axle 31 or axle support 32 of the movement-aiding part-unit 30, the cabinet structure 20 may be inserted into the receiving space 18 of the house 10 of the facility. By fitting the rotation axles 31 of the movement-aiding part-unit 30 onto the supporting half 32a of the axle support 32, the cabinet structure 20 may be inserted into the receiving space 18. Following this the cover halves 32b may be fitted onto the supporting halves 32a of the axle support 32 and then securely fixed with the fasteners 32c. It is advantageous if the axle support 32 has bearings, which makes the tilting of the cabinet structure 20 even easier. After the installation of the cabinet structure 20, the cover 17 may be placed onto the manhole body 11 of the house 10 and in this way the facility is ready for use.

If the cabinet structure 20 has to be turned out of the receiving space 18 of the manhole body 11 of the house 10, then first of all the moving cover 17b of the cover 17 must be removed from the top of the receiving space 18 using an appropriate tool. Following this - preferably using the same tool - by opening the second locking-structure-half 26 of the cabinet structure 20, releasing the first locking-structure-half 19, rotating the cabinet structure 20 around the rotation axles 31 of the movement-aiding part-unit 30, the one - larger - part of the cabinet structure 20 rises out of the receiving space 18 of the manhole body 11, while the other - smaller - part of the cabinet structure 20 turns further into the receiving space 18 of the manhole body 11. When the cabinet body 20 has rotated to the desired position, then the movement-limiting device 50 is retained at its fixing position and prevents the cabinet structure 20 from tilting back to its base position. With the cabinet structure 20 in this turned-out, maintenance position, the cabinet structure 20 protrudes out of the manhole body 11 of the house 10 so that the side plate 24 of the cabinet structure 20 rests up against the stationary cover 17a of the cover. In this way on the given side of the manhole body 11 of the house 10 is completely covered, while on the opposite side of the cabinet structure 20 the receiving space 18 may be accessed freely.

While turning it out, the person retaining the cabinet structure 20 at the second locking-structure-half 26 only has to exert a small amount of pulling force on the second locking-structure-half 26 of the cabinet structure 20, because the counterweight 40 is located on the part of the cabinet structure 20 on the other side of the rotation axle 31, the weight of which, also taking into consideration the weight of the cabinet structure 20 falling on the same side of the rotation axle 31, exerts approximately the same amount of torque on the rotation axle 31, as the torque originating from the weight of the cabinet structure 20 falling on the part between the rotation axle 31 and the second locking-structure-half 26. The cabinet structure 20 balanced in this way - in the same way as the seesaw principle - may be easily rotated around the rotation axle 31.

After this the work may be performed in the turned out cabinet structure 20, in this way the electrical equipment may be installed, maintained or even removed. After the work has been carried out the movement-limiting device 50 fixing the cabinet structure 20 may be released using the tool already used, and the cabinet structure may be tilted back around the rotation axle 31 into the receiving space 18 of the manhole body 11 of the house 10. When the cabinet structure again reaches its - substantially horizontal - basic position, then the second locking-structure-half 26 fitted to the cabinet structure 20 connects to the first locking-structure-half 19 fastened to the side wall 16 of the manhole body 11, and in this way the position of the cabinet structure 20 is fixed until it is once again opened with the tool. Finally the moving cover 17b of the cover 17 may be pulled back onto the manhole body 11 of the house 10 and with this the open part of the receiving space 18 may be closed up.

The facility according to the invention may be used to good effect for the protection of all electrical equipment where besides being located under the ground surface, protection against the penetration of water and easy maintenance are both requirements. In this respect, electrical equipment is not only transformer stations and electricity distributors, but also information technology and telecommunications junctions, central and peripheral units responsible for traffic control, as well as device groups operating public lighting.

**List of references**

| | |
|---|---|
| 1 electrical equipment | |
| | |
| 2 ground | |
| | |
| 3 surface | |
| | |
| 10 house | 11 manhole body |
| | 12 base member |
| | 13 side wall |
| | 14 side wall |
| | 15 side wall |
| | 16 side wall |
| | 17 cover |
| | 17a stationary cover |
| | 17b moving cover |
| | 18 receiving space |
| | 19 first locking-structure-half |
| | |
| 20 cabinet structure | 21 delimiting surface |
| | 22 side plate |
| | 23 side plate |
| | 24 side plate |
| | 24a external surface |
| | 25 corner |
| | 26 second locking-structure-half |
| | |
| 30 movement-aiding part-unit | 31 rotation axle |
| | 31a main axis line |
| | 32 axle support |
| | 32a support half |
| | 32b cover half |
| | 32c fastener |
| | |
| 40 counterweight | |
| | |
| 50 movement-limiting device | |
| | |
| 60 water-protected connection box | |
| | |
| 70 electric cable | |

## Claims

1. Facility for protecting electrical equipment which contains a house (10) enclosing a receiving space (18) as well as a tiltable cabinet structure (20) located in the receiving space (18) of the house (10) and suitable for accommodating the electrical equipment (1), a movement-aiding part-unit (30) facilitating the turning of the tiltable cabinet structure (20) is inserted between the tiltable cabinet structure (20) and the house (10), where the movement-aiding part-unit (30) has a rotation axle (31) with a main axis line (31a) and an axle support (32) cooperating with the rotation axle (31), one of the axle support (32) and the rotation axle (31) of the movement-aiding part-unit (30) is connected to the house (10) and the other from the axle support (32) and the rotation axle (31) of the same movement-aiding part-unit (30) is connected to the cabinet structure (20), **characterized by** that in the connected position of movement-aiding part-unit (30) the main axis line (31a) of the rotation axle (31) of movement-aiding part-unit (30) is different from any edge of the side plates (22, 23, 24) of the cabinet structure (20), which pass through on any corner (25) of the cabinet structure (20), the movement-aiding part-unit (30) is coupled with a counterweight (40), where the counterweight (40) is connected to the cabinet structure (20) in such a way that the torque exerted onto the rotation axle (31) as a result of the weight of the cabinet structure (20), and the torque exerted onto the rotation axle (31) as a result of the weight of the counterweight (40) of the movement-aiding part-unit (30) essentially balance each other.

2. Facility according to claim 1, **characterized by** that the movement-aiding part-unit (30) has two axle supports (32) and at least one rotation axle (31) cooperating with them, the axle supports (32) of the movement-aiding part-unit (30) are fastened to the two opposite side walls (13, 15) of the house (10), while the rotation axle (31) of the movement-aiding part-unit (30) cooperating with the axle supports (32) is connected to the cabinet structure (20) at places different to the corner (25) of the cabinet structure's (20) facing side plates (22, 23), and in this way the cabinet structure (20) is connected to the house (10) so that it may rotate as compared to the house (10).

3. Facility according to claim 1 or 2, **characterized by** that the counterweight (40) is connected to the cabinet structure (20) arranged near to the delimiting surface (21) of the cabinet structure (20), preferably along the external surface (24a) of the one side plate (24).

4. Facility according to any of claims 1-3, **characterized by** that the movement-aiding part-unit (30) has two rotation axles (31), and the individual rotation axles (31) are arranged coaxially between the two facing side plates (22, 23) of the cabinet structure (20) and the two facing side walls (13, 15) of the house (10).

5. Facility according to any of claims 1-4, **characterized by** that the axle support (32) of the movement-aiding part-unit (30) is assembled from a lower support half (32a) and an upper cover half (32b), and when the axle support (32) is in its operating position the support half (32a) and the cover half (32b) are fixed together using one or more fasteners (32c).

6. Facility according to any of claims 1-5, **characterized by** that the house (10) contains a manhole body (11) that has a base member (12) and side walls (13, 14, 15, 16) as well as a cover (17) covering the manhole body (11), and the manhole body (11) is at least partly sunk under the surface (3) into the ground (2).

7. Facility according to claim 6, **characterized by** that the cover (17) covering the house's (10) manhole body (11) is assembled from at least two parts, where the one part is created as a stationary cover (17a), while the other part is created as a moving cover (17b), and when the cover (17) is in its open position, the stationary cover (17a) is located on the manhole body (11) partially covering the manhole body (11).

8. Facility according to any of claims 1-7, **characterized by** that a movement-limiting device (50) preventing the tilting of the cabinet structure (20) is inserted between the house (10) and the cabinet body (20).

9. Facility according to any of claims 1-8, **characterized by** that a water-protected connection box (60) is located in the receiving space (18) of the house (10), and the water-protected connection box (60) is connected to the electrical equipment (1) located in the cabinet structure (20) with insulated electric cables (70).

## Patentansprüche

1. Vorrichtung zum Schützen elektrischer Einrichtungen, die ein Gehäuse (10), das einen Aufnahmeraum (18) umschließt, sowie eine schwenkbare Schrankstruktur (20) umfasst, die in dem Aufnahmeraum (18) des Gehäuses (10) angeordnet und dafür geeignet ist, die elektrischen Einrichtungen (1) aufzunehmen, wobei eine bewegungsunterstützende Teileinheit (30), die die Drehung der schwenkbaren Schrankstruktur (20) ermöglicht, zwischen der schwenkbaren Schrankstruktur (20) und dem Gehäuse (10) angeordnet ist, wobei die bewegungsunterstützende Teileinheit (30) eine Drehachse (31) mit einer Hauptachsenlinie (31a) und ein mit der Drehachse (31) zusammenwirkendes Achsenlager (32) aufweist, wobei eines des Achsenlagers (32) und der Drehachse (31) der bewegungsunterstützenden Teileinheit (30) mit dem Gehäuse (10) verbunden ist und das andere des Achsenlagers (32) und der Drehachse (31) der gleichen bewegungsunterstützenden Teileinheit (30) mit der Schrankstruktur (20) verbunden ist, **dadurch gekennzeichnet, dass** sich in der verbundenen Position der bewegungsunterstützenden Teileinheit (30) die Hauptachsenlinie (31a) der Drehachse (31) der bewegungsunterstützenden Teileinheit (30) von irgendeinem Rand der Seitenplatten (22, 23, 24) der Schrankstruktur (20) unterscheidet, die an irgendeiner Ecke (25) der Schrankstruktur (20) hindurchlaufen, wobei die bewegungsunterstützende Teileinheit (30) mit einem Gegengewicht (40) verbunden ist, wobei das Gegengewicht (40) mit der Schrankstruktur (20) in einer Weise derart verbunden ist, dass sich das als ein Ergebnis des Gewichts der Schrankstruktur (20) auf die Drehachse (31) ausgeübte Drehmoment und das als ein Ergebnis des Gewichts des Gegengewichts (40) der bewegungsunterstützenden Teileinheit (30) auf die Drehachse (31) ausgeübte Drehmoment im Wesentlichen miteinander ausgleichen.

2. Vorrichtung nach Anspruch 1, **dadurch gekennzeichnet, dass** die bewegungsunterstützende Teileinheit (30) zwei Achsenlager (32) und mindestens eine mit diesen zusammenarbeitende Drehachse (31) aufweist, wobei die Achsenlager (32) der bewegungsunterstützenden Teileinheit (30) an den zwei gegenüberliegenden Seitenwänden (13, 15) des Gehäuses (10) befestigt sind, während die mit den Achsenlagern (32) zusammenarbeitende Drehachse (31) der bewegungsunterstützenden Teileinheit (30) an Stellen mit der Schrankstruktur (20) verbunden ist, die sich von den Ecken (25) der sich zugewandten Seitenplatten (22, 23) der Schrankstruktur (20) unterscheiden, wobei die Schrankstruktur (20) auf diese Weise so mit dem Gehäuse (10) verbunden ist, dass sie sich im Verhältnis zu dem Gehäuse (10) verdrehen kann.

3. Vorrichtung nach Anspruch 1 oder 2, **dadurch gekennzeichnet, dass** das Gegengewicht (40) mit der Schrankstruktur (20) in der Nähe der begrenzenden Oberfläche (21) der Schrankstruktur (20) angeordnet verbunden ist, vorzugsweise entlang der äußeren Oberfläche (24a) der einen Seitenplatte (24).

4. Vorrichtung nach einem der Ansprüche 1-3, **dadurch gekennzeichnet, dass** die bewegungsunterstützende Teileinheit (30) zwei Drehachsen (31) aufweist, wobei die einzelnen Drehachsen (31) koaxial zwischen den zwei sich zugewandten Seitenplatten (22, 23) der Schrankstruktur (20) und den zwei sich zugewandten Seitenwänden (13, 15) des Gehäuses (10) angeordnet sind.

5. Vorrichtung nach einem der Ansprüche 1-4, **dadurch gekennzeichnet, dass** das Achsenlager (32) der bewegungsunterstützenden Teileinheit (30) aus einer unteren Lagerhälfte (32a) und einer oberen Abdeckhälfte (32b) zusammengesetzt ist, wobei, wenn sich das Achsenlager (32) in seiner Betriebsposition befindet, die Lagerhälfte (32a) und die Abdeckhälfte (32b) unter Verwendung eines oder mehrerer Befestigungsmittel (32c) miteinander verbunden sind.

6. Vorrichtung nach einem der Ansprüche 1-5, **dadurch gekennzeichnet, dass** das Gehäuse (10) einen Schachtkörper (11) aufweist, der ein Grundelement (12) und Seitenwände (13, 14, 15, 16) sowie eine Abdeckung (17), die den Schachtkörper (11) abdeckt, umfasst, wobei der Schachtkörper (11) zumindest teilweise unter die Oberfläche (3) in den Boden (2) abgesenkt ist.

7. Vorrichtung nach Anspruch 6, **dadurch gekennzeichnet, dass** die Abdeckung (17), die den Schachtkörper (11) des Gehäuses (10) abdeckt, aus mindestens zwei Teilen zusammengesetzt ist, wobei der eine Teil als eine stationäre Abdeckung (17a) ausgebildet ist, während der andere Teil als eine bewegliche Abdeckung (17b) ausgebildet ist, wobei, wenn sich die Abdeckung (17) in ihrer offenen Position befindet, die stationäre Abdeckung (17a) an dem Schachtkörper (11) so angeordnet ist, dass sie den Schachtkörper (11) teilweise abdeckt.

8. Vorrichtung nach einem der Ansprüche 1-7, **dadurch gekennzeichnet, dass** eine bewegungsbegrenzende Einrichtung (50), die das Verschwenken der Schrankstruktur (20) verhindert, zwischen das Gehäuse (10) und den Schrankkörper (20) eingesetzt ist.

9. Vorrichtung nach einem der Ansprüche 1-8, **dadurch gekennzeichnet, dass** eine wassergeschützte Verbindungsbox (60) in dem Aufnahmeraum (18) des Gehäuses (10) angeordnet ist, wobei die wassergeschützte Verbindungsbox (60) mittels isolierter elektrischer Kabel (70) mit den in der Schrankstruktur (20) angeordneten elektrischen Einrichtungen (1) verbunden ist.

## Revendications

1. Installation pour protéger un équipement électrique qui contient un logement (10) enfermant un espace de réception (18) ainsi qu'une structure d'armoire inclinable (20) située dans l'espace de réception (18) du logement (10) et appropriée pour accueillir l'équipement électrique (1), une unité de partie d'aide au mouvement (30) facilitant la rotation de la structure d'armoire inclinable (20) est insérée entre la structure d'armoire inclinable (20) et le logement (10), où l'unité de partie d'aide au mouvement (30) possède un axe de rotation (31) avec une ligne axiale principale (31a) et un support d'axe (32) coopérant avec l'axe de rotation (31), l'un parmi le support d'axe (32) et l'axe de rotation (31) de l'unité de partie d'aide au mouvement (30) est relié au logement (10) et l'autre parmi le support d'axe (32) et l'axe de rotation (31) de cette même unité de partie d'aide au mouvement (30) est relié à la structure d'armoire (20), **caractérisée en ce que**, dans la position reliée de l'unité de partie d'aide au mouvement (30), la ligne axiale principale (31a) de l'axe de rotation (31) de l'unité de partie d'aide au mouvement (30) est différente de tout bord des plaques latérales (22, 23, 24) de la structure d'armoire (20), qui traversent tout coin (25) de la structure d'armoire (20), l'unité de partie d'aide au mouvement (30) est couplée à un contrepoids (40), où le contrepoids (40) est relié à la structure d'armoire (20) d'une manière telle que le couple exercé sur l'axe de rotation (31) à la suite du poids de la structure d'armoire (20), et le couple exercé sur l'axe de rotation (31) à la suite du poids du contrepoids (40) de l'unité de partie d'aide au mouvement (30) s'équilibrent sensiblement.

2. Installation selon la revendication 1, **caractérisée en ce que** l'unité de partie d'aide au mouvement (30) comporte deux supports d'axe (32) et au moins un axe de rotation (31) coopérant avec eux, les supports d'axe (32) de l'unité de partie d'aide au mouvement (30) sont fixés aux deux parois latérales opposées (13, 15) du logement (10), alors que l'axe de rotation (31) de l'unité de partie d'aide au mouvement (30) coopérant avec les supports d'axe (32) est relié à la structure d'armoire (20) à des endroits différents des coins (25) des plaques latérales opposées (22, 23) de la structure d'armoire (20), et de cette façon la structure d'armoire (20) est reliée au logement (10) de manière à ce qu'elle puisse tourner par rapport au logement (10).

3. Installation selon la revendication 1 ou 2, **caractérisée en ce que** le contrepoids (40) est relié à la structure d'armoire (20) agencé près de la surface de délimitation (21) de la structure d'armoire (20), de préférence le long de la surface externe (24a) de l'une plaque latérale (24).

4. Installation selon l'une quelconque des revendications 1-3, **caractérisée en ce que** l'unité de partie d'aide au mouvement (30) comporte deux axes de rotation (31), et les axes de rotation individuels (31) sont agencés de manière coaxiale entre les deux plaques latérales opposées (22, 23) de la structure d'armoire (20) et les deux parois latérales opposées (13, 15) du logement (10).

5. Installation selon l'une quelconque des revendications 1-4, **caractérisée en ce que** le support d'axe (32) de l'unité de partie d'aide au mouvement (30) est assemblé à partir d'une moitié de support (32a) inférieure et d'une moitié de couvercle (32b) supérieure, et quand le support d'axe (32) est dans sa position de fonctionnement, la moitié de support (32a) et la moitié de couvercle (32b) sont fixées ensemble à l'aide d'un ou de plusieurs éléments de fixation (32c).

6. Installation selon l'une quelconque des revendications 1-5, **caractérisée en ce que** le logement (10) contient un corps de regard (11) qui comporte un élément de base (12) et des parois latérales (13, 14, 15, 16) ainsi qu'un couvercle (17) recouvrant le corps de regard (11), et le corps de regard (11) est au moins partiellement enfoncé sous la surface (3) dans le sol (2).

7. Installation selon la revendication 6, **caractérisée en ce que** le couvercle (17) recouvrant le corps de regard (11) du logement (10) est assemblé à partir d'au moins deux parties, où l'une partie est créée en tant que couvercle fixe (17a), alors que l'autre partie est créée en tant que couvercle mobile (17b), et quand le couvercle (17) se trouve dans sa position ouverte, le couvercle fixe (17a) se situe sur le corps de regard (11) recouvrant partiellement le corps de regard (11).

8. Installation selon l'une quelconque des revendications 1-7, **caractérisée en ce qu'**un dispositif de limitation de mouvement (50) empêchant l'inclinaison de la structure d'armoire (20) est inséré entre le logement (20) et le corps d'armoire (20).

9. Installation selon l'une quelconque des revendications 1-8, **caractérisée en ce qu'**une boîte de liaison protégée de l'eau (60) se situe dans l'espace de réception (18) du logement, et la boîte de liaison protégée de l'eau (60) est reliée à l'équipement électrique (1) situé dans la structure d'armoire (20) avec des câbles électriques isolés (70).
